# EUROPÄISCHE PATENTANMELDUNG

(11) **EP 1 612 104 A1**
(43) Veröffentlichungstag der Anmeldung: **04.01.2006**
(21) Anmeldenummer: 05012865.1
(22) Anmeldetag: 15.06.2005
(51) Int. Cl.: B60R 7/00

(54) **Abdeckeinrichtung für Staufächer**

(30) Priorität: 02.07.2004 DE 202004010406 U
(71) Anmelder: Lisa Dräxlmaier GmbH, 84137 Vilsbiburg (DE)
(72) Erfinder: Geisperger, Peter, 84416 Taufkirchen/Vils (DE); Köhler, Jürgen, 84137 Vilsbiburg (DE); Steckermeier, Thomas, 84137 Vilsbiburg (DE); Hagn, Hubert, 84178 Dietelskirchen (DE); Polland, Andreas, 84030 Ergolding (DE)
(74) Vertreter: HOFFMANN EITLE

(57) **Zusammenfassung**

Die Erfindung betrifft eine Abdeckeinrichtung für Staufächer (1), insbesondere zum Einbau in den Innenraum von Kraftfahrzeugen, mit einem Deckelelement, Halte- bzw. Führungsmitteln sowie einer Arretierungseinrichtung für das Deckelelement. Die Erfindung gekennzeichnet sich dadurch, dass das Deckelelement als flacher einteiliger Schiebedeckel (2) ausgebildet ist, der in einer flachen, taschenartigen Einkofferung (4) ein- und ausfahrbar geführt und zumindest in der ausgefahrenen Stellung über eine Rastanordnung arretierbar ist.

## Beschreibung

Die vorliegende Erfindung betrifft eine Abdeckeinrichtung für Staufächer, insbesondere zum Einbau in den Innenraum von Kraftfahrzeugen, mit einem Deckelelement, Halte- bzw. Führungsmitteln sowie einer Arretierungseinrichtung für das Deckelelement.

Bei Kraftfahrzeugen besteht das Problem, dass bei Unfällen der Inhalt der Staufächer unkontrolliert durch den Innenraum fliegen und deshalb zu Verletzungen der Fahrzeuginsassen führen kann. Aus Gründen der Sicherheit werden daher die Staufächer häufig mit Abdeckeinrichtungen der eingangs beschriebenen Art verschlossen.

Abdeckeinrichtungen dieser Art sind bereits seit langem in den verschiedensten Ausführungsformen bekannt. Das Deckelelement ist dabei überwiegend als Klappdeckel ausgeführt, der über eine Scharnieranordnung zumindest nach einer Seite aus einer Schließ- in eine Offenstellung verschwenkbar und sowohl in der Schließ- als auch in der Offenstellung arretierbar ist.

Bei beengten Raumverhältnissen und in denjenigen Fällen, in denen Klappdeckel aus optischen oder funktionellen Gründen stören, werden als Deckelelement auch Schiebedeckel eingesetzt, die in meist seitlich angeordneten Führungen zwischen einer Schließ- und einer Offenstellung hin und her verschoben werden können. Eine derartige Abdeckeinrichtung mit mehrteiligem Schiebedeckel ist beispielsweise aus der DE 196 46 645 bekannt. Auch bei dieser Abdeckeinrichtung ist der Schiebedeckel sowohl in der Schließ- als auch in der Offenstellung arretierbar.

Sowohl den Abdeckrichtungen mit Klappdeckel als auch den Abdeckeinrichtungen mit Schiebedeckel ist gemeinsam, dass sie relativ aufwändige Konstruktionen darstellen, die aus einer Vielzahl von Teilen bestehen und nicht selten eine komplexe Kinematik aufweisen. Dies gilt insbesondere dann, wenn die Schiebedeckel mehrteilig ausgebildet sind und der Deckel neben einer linearen Verschiebebewegung auch eine Schwenkbewegung um eine Achse durchführen muss, wie dies im Falle der DE 196 46 645 realisiert ist.

Aufgabe der vorliegenden Erfindung ist es daher, eine Abdeckeinrichtung zu schaffen, die sich insbesondere zum Einsatz in vertikal verlaufenden Flächen, wie beispielsweise der Innenverkleidung von Kfz-Türen oder dergleichen eignet, möglichst einfach aufgebaut ist und wenig Einbauraum benötigt.

Diese Aufgabe wird erfindungsgemäß dadurch gelöst, dass das Deckelelement als flacher, einteiliger Schiebedeckel ausgebildet ist, der in einer flachen, taschenartigen Einkofferung ein- und ausfahrbar geführt und zumindest in der ausgefahrenen Stellung über eine Rastanordnung arretierbar ist.

Der Erfindung liegt der Gedanke zugrunde, zu Gunsten einer möglichst einfachen und schmalen Konstruktion nur einen flachen einteiligen Schiebedeckel vorzusehen und diesen in einer schmalen raumsparenden Einkofferung zu führen, die sich insbesondere in den sehr beengten Platzverhältnissen zwischen der Türaußenwandung und der Türinnenverkleidung unterbringen lässt. Dabei kann die Einkofferung als komplettes separates Teil ausgestaltet sein oder in den Wandungsbereich des jeweiligen Staufaches vollständig oder zumindest teilweise integriert sein. Auch wird erfindungsgemäß auf eine aufwändige Arretierungseinrichtung verzichtet und stattdessen lediglich eine einfache Rastanordnung vorgesehen, die vorzugsweise lediglich aus einem Rastvorsprung und einer korrespondierenden Rastausnehmung besteht, wobei diese Elemente einfach in den Schiebedeckel bzw. die Einkofferung integriert sind und keine Einzelteile darstellen.

Der Schiebedeckel kann in jeder beliebigen Weise ausgebildet sein. Falls es sich um ein Staufach mit im Wesentlichen in einer Ebene verlaufenden Öffnung handelt, reicht es aus, wenn der Schiebedeckel als steife Platte ausgebildet ist. Handelt es sich dagegen um ein Staufach mit gewölbter Öffnung, ist es vorteilhaft, den Schiebedeckel als biegsame Platte auszubilden, um im geschlossenen Zustand des Staufaches ein einheitliches Erscheinungsbild zu erreichen.

Die Einkofferung kann den jeweiligen Gegebenheiten entsprechend ebenfalls sehr unterschiedlich ausgestaltet sein. Für den Fall, dass die Einkofferung als komplettes separates Teil gestaltet ist, ist es vorteilhaft, diese aus zwei im geringen Abstand zueinander angeordneten Wänden zu bilden, die an drei der vier Ränder miteinander verbunden sind. Der Abstand der Wände kann dabei verschieden sein.

Wesentlich ist lediglich, dass der Schiebedeckel in der Einkofferung ein- und ausfahrbar angeordnet werden kann. Grundsätzlich ist es möglich, den Schiebedeckel zwischen den Wänden unmittelbar zu führen. Wird jedoch eine präzise Führung gefordert, ist es vorteilhaft, den Schiebedeckel jeweils zwischen einander gegenüber liegenden Führungsschienen zu führen, die den Schiebedeckel zwischen sich aufnehmen.

Die Führungsschienen können jede geeignete Form aufweisen. Eine besonders einfache Ausgestaltung ergibt sich, wenn die Führungsschienen im Wesentlichen einen U-förmigen Querschnitt aufweisen.

Grundsätzlich können die Führungsschienen zwischen den im Abstand zueinander angeordneten Wänden der Einkofferung angeordnet sein. Insbesondere bei der Ausbildung einer Einkofferung aus Kunststoff ist es zweckmäßig, die Führungsschienen in den Verbindungsbereich der Wände zu integrieren.

Die Rastanordnung kann ebenfalls in der verschiedensten Weise ausgebildet sein. Um eine präzise Funktionsweise zu gewährleisten, ist es jedoch vorteilhaft, einen Rastvorsprung vorzusehen, der zum Zwecke der Arretierung in eine korrespondierende Rastausnehmung einrastbar ist.

Eine besonders einfache Ausgestaltung der Rastanordnung ergibt sich, wenn der jeweilige Schiebedeckel mindestens eine Rastnase und die zugeordnete Einkofferung zumindest eine korrespondierende Rastausnehmung besitzt.

Zum Betätigen des Schiebedeckels ist es vorteilhaft, an diesem eine Handhabe vorzusehen. Die Handhabe kann dem jeweiligen Design entsprechend ausgestaltet und als Griffanordnung, Leiste, Ausnehmung oder dergleichen ausgestaltet werden.

Im Folgenden ist zur weiteren Erläuterung und zum besseren Verständnis der Erfindung ein Ausführungsbeispiel unter Bezugnahme auf die beigefügten Zeichnungen näher beschrieben und erläutert.
- Figur 1: zeigt in einer perspektivischen Ansicht einen Teil einer Kraftfahrzeugtüre vom Fahrzeuginneren aus gesehen,
- Figur 2: zeigt in vergrößertem Maßstab teilweise abgebrochen einen Schnitt in der Ebene II-II der Figur 1, und
- Figur 3: zeigt ebenfalls in vergrößertem Maßstab teilweise abgebrochen einen Schnitt in der Ebene III-III der Figur 2.

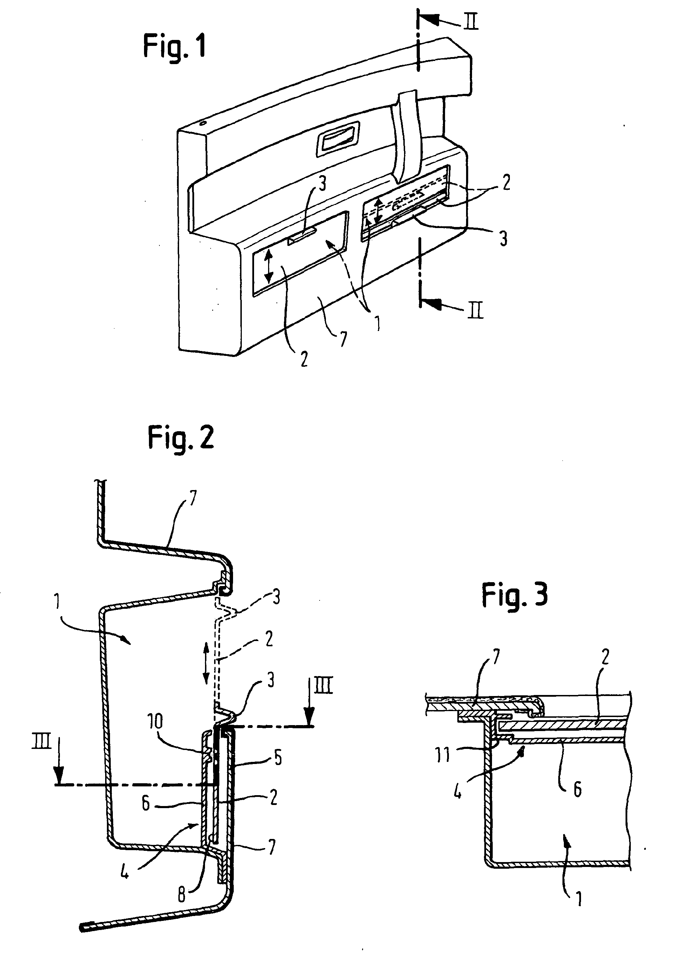

Die in Figur 1 dargestellte Fahrzeugtüre ist mit zwei nebeneinander liegenden Staufächern 1 ausgestattet, die aus Gründen der Sicherheit jeweils mit flachen einteiligen Schiebedeckeln 2 ausgestattet sind, die - wie mit Pfeilen angedeutet - von einer abgesenkten Offenstellung in eine angehobene Schließstellung verschoben werden können.

Beide Schiebedeckel 2 sind zur Betätigung mit einer Handhabe 3 in Form einer Griffleiste ausgestattet.

Wie sich aus den Figuren 2 und 3 ergibt, sind die Schiebedeckel 2 jeweils als steife Platte ausgebildet, die in einer flachen taschenartigen Einkofferung 4 geführt sind.

Die Einkofferung 4 besteht im vorliegenden Ausführungsbeispiel aus zwei in geringem Abstand zueinander angeordneten Wänden 5 und 6, wobei die dem Innenraum des Kraftfahrzeuges zugewandte Wand 5 Bestandteil der Innenauskleidung 7 der Kraftfahrzeugtüre ist und die Wand 6 der Einkofferung 4 das Staufach 1 zur Kraftfahrzeuginnenseite abschließt.

Um den Schiebedeckel 2 in seiner Schließstellung zu halten, ist dieser im Bereich seines unteren Endes mit einer Rastnase 8 ausgestattet, die mit einer an der Wand 6 angeordneten Rastausnehmung 10 zusammenwirkt.

Wie aus Figur 3 hervorgeht, ist der Schiebedeckel 2 im Bereich seiner seitlichen Ränder über Führungsmittel in Form von Führungsschienen 11 geführt, die in den Randbereich der Einkofferung 4 integriert sind.

## Patentansprüche

1. Abdeckeinrichtung für Staufächer (1), insbesondere zum Einbau in den Innenraum von Kraftfahrzeugen, mit einem Deckelelement, Halte- bzw. Führungsmitteln sowie einer Arretierungseinrichtung für das Deckelelement, **dadurch gekennzeichnet, dass** das Deckelelement als flacher einteiliger Schiebedeckel (2) ausgebildet ist, der in einer flachen, taschenartigen Einkofferung (4) ein- und ausfahrbar geführt und zumindest in der ausgefahrenen Stellung über eine Rastanordnung arretierbar ist.

2. Abdeckeinrichtung nach Anspruch 1, **dadurch gekennzeichnet, dass** der Schiebedeckel (2) als steife Platte ausgebildet ist.

3. Abdeckeinrichtung nach Anspruch 1, **dadurch gekennzeichnet, dass** der Schiebedeckel (2) als biegsame Platte ausgebildet ist.

4. Abdeckeinrichtung nach Anspruch 1, **dadurch gekennzeichnet, dass** die Einkofferung (4) aus zwei in geringem Abstand zueinander angeordneten Wänden (5, 6) besteht, die an drei der vier Ränder miteinander verbunden sind.

5. Abdeckeinrichtung nach Anspruch 2 bis 4, **dadurch gekennzeichnet, dass** der Abstand der Wände (5, 6) zueinander größer ist als die Stärke der Platte.

6. Abdeckeinrichtung nach Anspruch 1 und 4, **dadurch gekennzeichnet, dass** die Führungsmittel für den Schiebedeckel (2) aus jeweils einander gegenüber liegenden Führungsschienen (11) gebildet sind, die zwischen den Wänden (5, 6) angeordnet sind und den Schiebedeckel (2) zwischen sich aufnehmen.

7. Abdeckeinrichtung nach Anspruch 6, **dadurch gekennzeichnet, dass** die Führungsschienen (11) im Wesentlichen einen U-förmigen Querschnitt aufweisen.

8. Abdeckeinrichtung nach Anspruch 4, 6 und 7, **dadurch gekennzeichnet, dass** die Führungsschienen (11) in den Verbindungsbereich der Wände integriert sind.

9. Abdeckeinrichtung nach Anspruch 1, **dadurch gekennzeichnet, dass** die Rastanordnung aus mindestens einer an dem Schiebedeckel (2) angeordneten Rastnase (8) sowie mindestens einer an der Innenseite der Einkofferung angeordneten Rastausnehmung (10) besteht.
